# DEMANDE DE BREVET EUROPEEN

(11) **EP 0 721 069 A1**
(43) Date de publication de la demande: **10.07.1996**
(21) Numéro de dépôt: 95402835.3
(22) Date de dépôt: 15.12.1995
(51) Int. Cl.: F16B 7/04, F16B 9/02, F16B 12/40, F16B 12/20, F16B 12/44

(54) **Pièce d'assemblage pour la fixation de barreaux sans partie saillante**

(30) Priorité: 09.01.1995 FR 9500166
(71) Demandeur: Mathou, Marcel, F-12630 Gages (FR)
(72) Inventeur: Mathou, Marcel, F-12630 Gages (FR)
(74) Mandataire: Fruchard, Guy

(57) **Abrégé**

Elle comprend deux manchons (4, 6) délimités par des parois ayant des axes perpendiculaires (8, 10) et deux extrémités adjacentes rigidement reliées l'une à l'autre pour délimiter un angle présentant un côté interne (16) et un côté externe (18). L'extrémité du premier manchon (4) présente une cloison terminale plane (20) perpendiculaire à l'axe (8) de ce manchon et en retrait par rapport au côté externe (18) délimité par le deuxième manchon (6). La pièce comprend au moins une butée (26, 28) s'étendant au bord de la cloison terminale (20) du premier manchon et accolée à la paroi du deuxième manchon (6).

## Description

L'invention concerne une pièce d'assemblage comprenant deux manchons délimités par des parois ayant des axes perpendiculaires.

Il est connu de réaliser des portiques de jeux ou des meubles pour enfants (lits, parcs ...) en assemblant des panneaux plans constitués de barreaux cylindriques. Ces panneaux comprennent deux barreaux longitudinaux reliés par des barres transversales ayant la fonction d'entretoise.

On connaît des assemblages comportant deux panneaux fixés par un bord à un barreau commun constituant un montant. Pour cela, on munit une extrémité des barreaux longitudinaux d'une pièce d'assemblage qui comprend d'une part un manchon dans lequel on engage cette extrémité et d'autre part un organe de fixation au montant, par exemple une bague présentant une fente radiale qui permet son engagement sur le montant.

Pour éviter le désengagement des bagues par coulissement le long du montant, on engage la bague à distance de l'extrémité du montant et on fixe un bouchon formant une butée à l'extrémité du montant. Si le montant est vertical, il présente donc en partie supérieure une tête saillante, ce qui est dangereux pour de jeunes enfants qui risquent d'y accrocher un cordon porté autour de leur cou.

Par ailleurs il peut être utile d'empiler les assemblages ainsi constitués. Par exemple, on peut réaliser des lits superposés en disposant les montants du lit supérieur dans le prolongement des montants du lit inférieur. Avec les assemblages existants il est nécessaire d'assurer l'alignement des montants des deux lits au moyen d'axes de centrage engagés dans chaque montant.

Ces opérations visant l'ajustement précis des montants compliquent la fabrication des pièces et le montage des lits, et augmentent le coût de l'ensemble.

L'invention vise à pallier ces inconvénients en réalisant une pièce d'assemblage éliminant tout risque d'accrochage en tête de montant et facilitant l'empilement des meubles réalisés, par exemple des lits, en fournissant un alignement immédiat des meubles empilés.

Selon l'invention, on propose une pièce d'assemblage comprenant un premier et un deuxième manchons délimités par des parois ayant des axes perpendiculaires et deux extrémités adjacentes rigidement reliées l'une à l'autre pour délimiter un angle présentant un côté interne et un côté externe, dans laquelle l'extrémité du premier manchon présente une cloison terminale plane perpendiculaire à l'axe de ce manchon et en retrait par rapport au côté externe délimité par le deuxième manchon, la pièce comprenant en outre au moins une butée s'étendant au bord de la cloison terminale du premier manchon et accolée à la paroi du deuxième manchon.

On dispose par exemple une pièce de ce type en tête de chaque montant des lits inférieur et supérieur. Le premier manchon recouvre la tête du montant et le deuxième manchon recouvre l'extrémité d'un barreau longitudinal supérieur d'un panneau relié à ce montant. Le barreau longitudinal inférieur de ce panneau et les barreaux longitudinaux du panneau adjacent peuvent être reliés à un montant par des pièces semblables ou par des bagues à fente radiale comme indiqué précédemment.

La cloison terminale de la pièce d'assemblage constitue ainsi la tête des montants du lit supérieur. La disposition de cette cloison en retrait comme précité a pour conséquence que la portion d'extrémité supérieure des montants n'est plus saillante. On élimine ainsi tout risque d'accrochage.

De plus, en disposant cette pièce en tête des quatres montants du lit inférieur, les pieds du lit supérieur reposent sur les cloisons terminales du lit inférieur. Les butées assurent l'alignement des pieds des montants du lit supérieur avec la tête des montants du lit inférieur.

De préférence les pièces d'assemblage présentent chacune au moins deux butées disposées symétriquement de part et d'autre du plan médian. On peut ainsi utiliser des pièces toutes identiques pour obtenir l'alignement.

On peut également utiliser des pièces d'assemblage qui présentent chacune une seule butée. On assure alors l'alignement des montants en disposant les butées pour qu'elles retiennent les montants du niveau supérieur quelle que soit la direction de l'effort auquel il est soumis. Par exemple, sur chaque pièce, la butée se trouvera vers l'intérieur du lit.

Selon une version avantageuse de l'invention, le premier manchon présente une deuxième extrémité comprise dans un plan perpendiculaire à l'axe de ce manchon et tangent à la paroi du deuxième manchon.

Cette configuration permet de réaliser un gain de place dans certains assemblages. On peut par exemple relier deux pièces d'assemblage en disposant leurs premiers manchons coaxialement et en contact l'un avec l'autre par leurs deuxièmes extrémités, ces manchons étant engagés sur un barreau commun qu'ils recouvrent totalement.

D'autres caractéristiques et avantages de l'invention apparaîtront encore dans la description qui va suivre d'un mode préféré de réalisation. Aux dessins annexés donnés à titre d'exemples non-limitatifs:
- la figure 1 est une vue en plan d'un mode de réalisation de la pièce d'assemblage;
- la figure 2 est une vue en coupe suivant le plan II-II de la figure 1; et
- la figure 3 est une vue en perspective partielle d'un coin d'un assemblage constituant deux lits superposéss et comprenant plusieurs exemplaires de la pièce des figures 1 et 2.

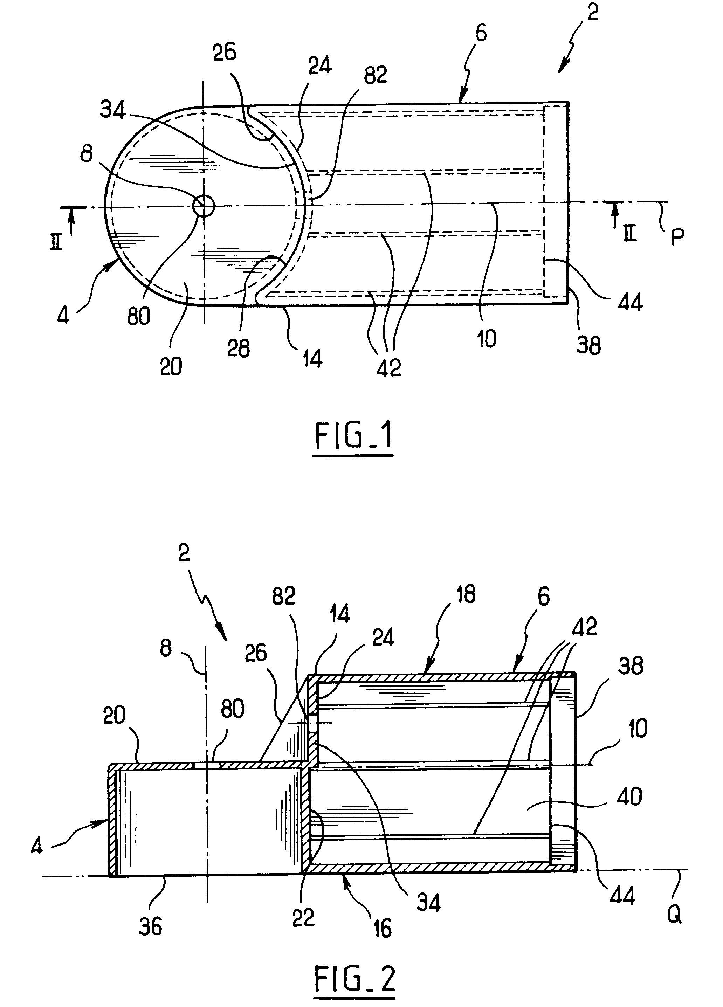

Une pièce d'assemblage 2 selon l'invention est représentée aux figures 1 et 2. Elle comprend deux manchons 4 et 6 délimités par des parois ayant des axes 8 et 10 perpendiculaires. Les manchons 4 et 6 ont même diamètre. Les manchons ont deux extrémités adjacentes rigidement reliées l'une à l'autre. Dans cette disposition, les manchons 4, 6 délimitent un angle présentant un côté interne 16 et un côté externe 18 comme le montre la figure 2.

L'extrémité du premier manchon 4 présente une cloison terminale plane 20 perpendiculaire à l'axe 8 de ce manchon, qui obture cette extrémité. La cloison 20 se trouve en retrait par rapport au côté externe 18 délimité par le deuxième manchon 6. En l'espèce, la cloison 20 est comprise dans un plan perpendiculaire à l'axe 8 et comprenant l'axe 10 du deuxième manchon 6. Le manchon 4 ne recouvre donc que la moitié inférieure 22 de l'extrémité 14 du manchon 6, en laissant libre sa moitié supérieure 24.

La pièce 2 comprend en outre au moins une butée, ici deux butées 26 et 28 s'étendant au bord de la cloison terminale 20 du premier manchon 4 et accolée à la paroi du deuxième manchon 6. Les butées 26 et 28 sont symétriques l'une de l'autre par rapport au plan P, visible sur la figure 1, qui comprend les axes 8 et 10 des manchons.

En l'espèce, les butées 26, 28 sont formés par la cloison terminale courbe 34 du deuxième manchon 6. Cette cloison 34 est coaxiale au premier manchon 4 et s'étend au bord de la cloison terminale plane 20. Les butées 26, 28 ont donc ici la forme de deux ailes d'un seul tenant avec le deuxième manchon 6.

Chaque manchon 4, 6 présente une deuxième extrémité 36, 38 ouverte.

La deuxième extrémité 36 du premier manchon 4 est comprise dans un plan Q qui est perpendiculaire à l'axe 8 de ce manchon 4 et tangent à la paroi du deuxième manchon 6, du côté interne 16 de l'angle délimité par les manchons.

Le deuxième manchon 6 présente sur sa face interne 40 au moins une saillie radiale, ici quatre saillies 42 s'étendant suivant une direction longitudinale au manchon 6. Ce même manchon présente également sur sa face interne 40 un épaulement 44 adjacent à l'extrémité ouverte 38. Lorsque le barreau auquel est associé la pièce d'assemblage comporte une âme en bois recouverte d'un tube en matière plastique les saillies 42 s'incrustent dans l'âme en bois tandis que l'épaulement 44 sert de butée pour le tube en matière plastique, la paroi interne du manchon 6 assurant alors le centrage de tube en matière plastique par rapport à l'âme en bois.

La cloison terminale plane 20 et la cloison terminale courbe 34 peuvent être percées chacune d'un orifice 80, 82 par exemple pour le centrage ou la fixation de la pièce d'assemblage 2 à un barreau engagé dans l'un des manchons.

La pièce 2 est ici réalisée en matière plastique moulé.

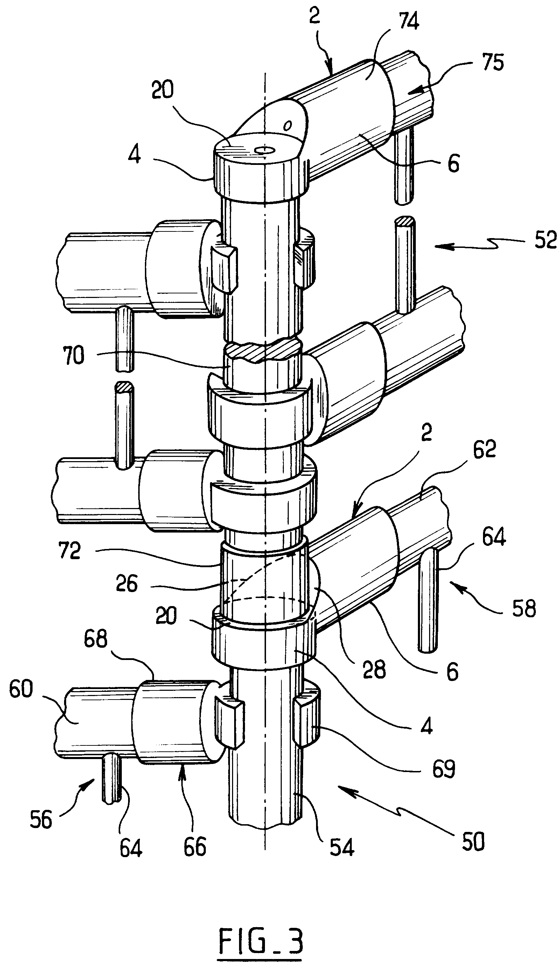

La pièce qui vient d'être décrite est utilisée comme élément d'assemblage, par exemple pour l'assemblage de lits superposés 50 et 52 dont seul un coin a été représenté sur la figure 3, les trois autres coins ayant des structures similaires.

Sur cette figure, le lit inférieur 50 comporte un montant vertical 54, constitué par un barreau cylindrique, portant deux panneaux 56 et 58 qui forment un angle droit entre eux. Les panneaux 56 et 58 comprennent chacun deux barreaux longitudinaux cylindriques horizontaux (dont un seul, respectivement référencé 60 et 62 est représenté pour chaque panneau) reliés par des entretoises verticales 64.

Le barreau 60 porte un élément de fixation 66 comprenant un manchon 68 engagé sur l'extrémité du barreau 60. L'élément de fixation 66 comprend aussi une bague fendue 69 engagée sur le barreau vertical 54. Les barreaux longitudinaux non représentés des panneaux 56, 58 sont reliés au barreau 54 par un élément de fixation identique à l'élément 66.

La figure 3 montre une pièce d'assemblage 2 du lit 50, dont le premier manchon 4 est engagé sur l'extrémité supérieure du barreau 54 qu'il recouvre. Le deuxième manchon 6 de cette pièce 2 est engagé sur l'extrémité du barreau 62 qu'il recouvre.

Le lit supérieur 52 est strictement identique au lit inférieur 50 qui vient d'être décrit. L'extrémité inférieure de chaque montant 70 du lit supérieur 52 porte un embout 72 engagé sur cette extrémité. Chaque montant 54 du lit inférieur 50 porte un embout identique reposant sur le sol.

Le lit 52 est posé sur le lit 50 de sorte que les quatre montants 70 du lit supérieur soient dans le prolongement vertical des montants 54 du lit inférieur. Pour cela, les embout 72 du lit supérieur 52 reposent sur les cloisons terminales planes 20 des pièces d'assemblage 2 du lit inférieur 50. Ces cloisons planes 20 constituent le plan de support du lit supérieur.

Les butées 26, 28 des quatres pièces d'assemblage 2 du lit inférieur 50 coopèrent pour interdire le glissement des embouts 72 hors d'un alignement avec les montants 54. L'alignement des deux lits est obtenu automatiquement dès que le lit supérieur 52 est posé sur le lit inférieur 50 selon cette disposition. Les huit butées 26, 28 (dont seulement deux sont représentées) du lit inférieur 50 réalisent ici un ajustement très précis du lit supérieur sur le lit inférieur 50.

On obtiendrait également un ajustement précis avec des pièces d'assemblage 2 comprenant une seule butée. Pour cela, on pourrait utiliser deux types de pièces d'assemblages ne présentant pas la butée du même côté du plan P, par exemple les quatre butées pourraient s'étendre toutes vers l'extérieur du lit 50 ou au contraire toutes vers l'intérieur.

Le manchon 4 de chaque pièce 2 du lit supérieur 52 constitue la tête du montant 70 associé. Cette tête se trouve en retrait du bord supérieur 74 du panneau porté en partie par ce manchon 4. Ce bord 74 correspond au bord externe de l'angle précité délimité par les deux manchons. Aucun objet ( vêtement, collier, lanière, ...) ne peut donc s'accrocher accidentellement sur la tête de ce montant.

Un dispositif classique de verrouillage des panneaux de chaque lit entre eux sera prévu, ainsi qu'un support pour l'installation d'un matelas dans chaque lit.

Dans un autre mode de réalisation non représenté, on pourra assembler deux pièces d'assemblage 2 avec les premiers manchons 4 coaxiaux l'un avec l'autre et en contact mutuel par l'extrémité 36 de sorte que les plans Q de deux pièces d'assemblages adjacentes seront confondus. Un barreau court sera engagé dans les manchons 4 en étant recouvert totalement par ceux-ci.

Les pièces d'assemblage pourraient aussi faire partie d'un système d'articulation des panneaux deux à deux comprenant à chaque fois deux axes de rotation parallèles et distincts.

Dans un autre mode de réalisation non représenté dans lequel les pièces d'assemblage portent une seule butée, on pourra disposer deux pièces d'assemblage 2 avec les premiers manchons 4 coaxiaux l'un avec l'autre et les cloisons terminales planes 20 en contact l'une avec l'autre, une cloison terminale plane servant par exemple de support à l'autre. On pourra superposer des structures en associant leurs pièces d'assemblage de cette façon.

Bien entendu, on pourra apporter à l'invention de nombreuses modifications et améliorations sans sortir du cadre de celle-ci. On pourra notamment modifier la forme des butées et l'amplitude du retrait de la cloison terminale plane 20 par rapport au bord externe 18.

## Revendications

1. Pièce d'assemblage (2) comprenant un premier et un deuxième manchons (4, 6) délimités par des parois ayant des axes perpendiculaires (8, 10) et deux extrémités adjacentes (12, 14) rigidement reliées l'une à l'autre pour délimiter un angle présentant un côté interne (16) et un côté externe (18), caractérisée en ce que l'extrémité du premier manchon (4) présente une cloison terminale plane (20) perpendiculaire à l'axe (8) de ce manchon et en retrait par rapport au côté externe (18) délimité par le deuxième manchon (6), la pièce comprenant en outre au moins une butée (26, 28) s'étendant au bord de la cloison terminale (20) du premier manchon et accolée à la paroi du deuxième manchon (6).

2. Pièce d'assemblage selon la revendication 1, caractérisée en ce que la butée (26, 28) comprend une cloison terminale courbe (34) du deuxième manchon.

3. Pièce d'assemblage selon l'une des revendications 1 ou 2, caractérisée en ce que le premier manchon (4) présente une deuxième extrémité (36) comprise dans un plan (Q) perpendiculaire à l'axe (8) de ce manchon et tangent à la paroi du deuxième manchon (6).

4. Pièce d'assemblage selon l'une des revendications 1 à 3, caractérisée en ce qu'au moins l'un (6) des manchons présente sur sa face interne (40) au moins une saillie radiale (42) s'étendant suivant une direction longitudinale au manchon.

5. Pièce d'assemblage selon l'une des revendications 1 à 4, caractérisée en ce qu'au moins l'un (6) des manchons présente sur sa face interne (40) un épaulement (44) adjacent à une extrémité ouverte (38).
